Europäisches Patentamt

**European Patent Office**

Office européen des brevets

(11) Numéro de publication: **0 336 796**
**A1**

## (12) DEMANDE DE BREVET EUROPEEN

(21) Numéro de dépôt: **89400680.8**

(51) Int. Cl.⁴: **A 22 C 13/00**

(22) Date de dépôt: **10.03.89**

(30) Priorité: **11.03.88 FR 8803213**

(43) Date de publication de la demande:
**11.10.89 Bulletin 89/41**

(84) Etats contractants désignés:
**AT BE CH DE ES FR GB GR IT LI LU NL SE**

(71) Demandeur: **LUISSIER BORDEAU CHESNEL**
**F-72470 Champagné (FR)**

(72) Inventeur: **Chauvin, Bernard Louis**
**Les Muscardières Le Vieil Baugé**
**F-49150 Baugé (FR)**

(74) Mandataire: **Derambure, Christian et al**
**BUGNION ASSOCIES 55, rue Boissonade**
**F-75014 Paris (FR)**

(54) **Procédé de finition de produits alimentaires et produits alimentaires obtenus par la mise en oeuvre du procédé.**

(57) Procédé de finition de produits alimentaires tels que des produits carnés ou lactés dans lequel on enrobe le produit alimentaire en finition dans sa forme finale dans un matériau de finition caractérisé en ce que l'on réalise d'abord l'enrobage du produit alimentaire en finition et/ou d'une nappe d'un produit d'enveloppement continu souple et déformable durablement, mince, absorbant ou présentant une certaine perméabilité et plus spécialement un papier mousseline ; puis on dépose au moins une nappe du produit d'enveloppement sur le produit alimentaire en finition ; et, enfin, on laisse prendre le matériau de solidarisation jusqu'à ce que le produit d'enveloppement soit solidarisé au produit alimentaire fini.

EP 0 336 796 A1

Description

# PROCEDE DE FINITION DE PRODUITS ALIMENTAIRES ET PRODUITS ALIMENTAIRES OBTENUS PAR LA MISE EN OEUVRE DU PROCEDE

L'invention concerne un procédé de finition de produits alimentaires et les produits alimentaires obtenus par la mise en oeuvre du procédé.

L'invention est destinée, plus spécialement à des produits alimentaires à état de surface convenable notamment sec ou à activité en eau limitée, du type massif et à consistance générale solide, ayant un matériau de finition qui l'enrobe. Des exemples typiques de tels produits sont, notamment, des produits carnés -par exemple des saucisses sèches ou équivalent- ou des produits lactés- par exemple des fromages ou spécialités fromagères.

Pour s'en tenir, par exemple, au cas des saucisses (ou saucissons) sèches, celles-ci subissent, après leur fabrication et maturation proprement dite et avant la vente, des traitements en vue de la présentation à la vente et notamment le développement d'une fleur naturelle ; ou le fleurage (ou talcage, farinage) avec un mélange pulvérulent blanc simulant visuellement une fleur naturelle ; ou le lavage-brossage ou équivalent dans le cas d'une saucisse sans fleur ; ou, enfin, l'enrobage dans une pellicule imperméable, telle que de la cire. Les saucisses sèches peuvent également être dans des enveloppes pelables. Puis, généralement, les saucisses sèches sont étiquettées, et/ou mises en sachet, et/ou emballées. On peut se référer utilement, concernant cette technologie en général et ces traitements en particulier, à l'ouvrage : "La Charcuterie Crue" de M. MIGAUD avec la collaboration de J.C. FRENZ, Editions SOUSSANA SA (1978). Le plus souvent, la saucisse sèche est présentée baguée, le marquage étant réalisé sur la bague serrée sur la saucisse.

Cet état connu de la technique est source de problèmes variés : la fleur naturelle est peu facile à contrôler dans son développement ; la fleur naturelle ou tout fleurage d'imitation a souvent tendance à se décoller de la saucisse sèche ce qui est gênant (l'aspect de la saucisse est affecté, salissures de l'usager, etc ...) ; la saucisse sans fleur ou enrobée de cire ou équivalent fait perdre au produit son aspect traditionnel et donc devient mal perçue par le consommateur.

On connaît également des boyaux pour saucisses (voir op. cité) réalisés selon différentes variantes. Selon le document EP 0 068 349, le boyau comporte deux couches : une couche extérieure textile et une couche intérieure de collagène. Selon le document SU 380 299, un matériau fibreux est imprégné d'une composition contenant une solution d'alcool polyvinylique, une solution de gélatine, de l'acide lactique, du sérum de sang, du glycérol. Selon le document GB 1 042 182, le boyau est pelable et comprend de la cellulose regénérée et un dimère de ketène. Le boyau peut être en papier tel que le papier bible. Selon le document FR 2 517 178, une gaine est à deux couches, à partir de tissu textile. Selon le document FR 1 394 590, le boyau est constitué par une couche support et un revêtement intérieur qui réduit la perméabilité à l'air et à la vapeur d'eau. La couche support peut être un papier à longues fibres avec un ester de cellulose. Toutefois, cet état de la technique impose l'usage de tels boyaux, avec les techniques correspondantes, ce qui n'est pas toujours souhaitable.

On connaît enfin (document DE 32 39 069) un procédé de fabrication de fromage qui comporte la mise en place d'une matière imperméable. Mais cette technique est peu adaptée au cas d'un produit alimentaire devant "respirer".

De plus, l'état de la technique relatif aux boyaux et au document DE 32 39 069 ne résoud pas le problème d'un marquage, notamment répétitif et/ou total, du produit alimentaire surtout dans le cas où la surface de celui-ci est irrégulière ou avec des petits reliefs.

L'invention vise donc à proposer un produit alimentaire, du type indiqué plus haut c'est-à-dire comportant un matériau de finition qui l'enrobe et qui, en combinaison a un toucher doux, est exempt de corps exogène tel que talc ou flore de surface ; a un aspect de haute qualité ; a une surface extérieure épousant intimement celle du produit alimentaire en finition ; autorise une respiration convenable du produit alimentaire ; autorise un marquage du produit alimentaire fini répétitif et/ou total ; autorise le pelage et soit tranchable.

Une application particulière de l'invention est la réalisation d'une "enveloppe-étiquette" faisant corps avec et épousant parfaitement le produit alimentaire, comportant des signes visibles de marquage, de repérage, de décoration, de présentation, pelable et tranchable.

A cet effet, l'invention propose d'abord un procédé de finition de produits alimentaires à état de surface convenable notamment sec ou à activité en eau limitée, du type massif et à consistance générale solide, tels que, notamment, des produits carnés -par exemple des saucisses sèches ou équivalent- ou des produits lactés -par exemple des fromages ou spécialités fromagères- dans lequel on enrobe le produit alimentaire en finition dans sa forme finale ou quasi finale dans un matériau de finition caractérisé en ce que l'on réalise d'abord l'enrobage, au moins partiel, préférentiellement du produit alimentaire en finition et/ou subsidiairement d'une nappe d'un produit d'enveloppement continu souple et déformable durablement, mince, absorbant ou présentant une certaine perméabilité et plus spécialement un papier mousseline ou équivalent avec un matériau de solidarisation en quantité d'une part suffisante pour assurer la solidarisation de la nappe du produit d'enveloppement au produit alimentaire, d'autre part limitée pour éviter de traverser substantiellement la nappe vers l'extérieur ; puis on dépose au moins une nappe du produit d'enveloppement sur le produit alimentaire en finition ; et, enfin, on laisse prendre le matériau de solidarisation jusqu'à ce que le produit d'enveloppement soit solidarisé au produit alimentaire fini qui, en combinaison, a un toucher doux, est exempt de corps exogène tel que talc ou flore de surface ; a un aspect de haute qualité ; autorise une respiration convenable du produit alimentaire ; autorise un marquage du produit alimentaire fini ; autorise le pelage et soit tranchable, le produit d'enveloppement constituant une enveloppe intime, notamment totale, du produit alimentaire et, plus spécifiquement, une enveloppe-étiquette.

L'invention propose, ensuite un produit alimentaire traité par le procédé qui vient d'être décrite.

Selon une autre caractéristique de ce produit alimentaire, la nappe de produit d'enveloppement constitue une enveloppe totale du produit alimentaire formant étiquette.

Les autres caractéristiques de l'invention résulteront de la description qui suit.

L'invention concerne un procédé de finition d'un produit alimentaire à état de surface convenable notamment sec ou à activité en eau limitée, du type massif et à consistance solide. Des produits alimentaires convenables pour la mise en oeuvre du procédé selon l'invention sont notamment des produits carnés tels que des saucisses sèches ou équivalent, ou encore des produits lactés tels que des fromages ou spécialités fromagères.

De tels produits alimentaires peuvent être plus ou moins humides à coeur. Leur surface extérieure, d'une certaine étendue, est dans son ensemble plus ou moins plane et/ou incurvée et, localement, peut comporter des reliefs localisés, en saillie ou en creux plus ou moins importants. Des exemples typiques de surface extérieure sont celles des saucisses sèches ou de spécialités fromagères. Un tel produit alimentaire en finition peut comporter initialement une autre enveloppe, continue ou discontinue, naturelle ou synthétique. Une telle autre enveloppe est par exemple le boyau de constitution d'une saucisse.

De façon connue en soi, on enrobe le produit alimentaire en finition dans sa forme finale ou quasi finale dans un matériau de finition en vue d'obtenir le produit alimentaire fini. On entend par produit alimentaire en finition le produit alimentaire dans l'état où il se trouve avant d'être enrobé avec le matériau de finition. On entend par forme finale ou quasi finale du produit alimentaire en finition la forme que le produit alimentaire fini au moment de sa présentation en vue de la vente ou au moment d'être consommé. On entend par enrobage du produit alimentaire en finition avec un matériau de finition le fait que le matériau de finition recouvre le produit alimentaire en faisant corps avec ce dernier.

Selon l'invention, on réalise d'abord l'enrobage au moins partiel et préférentiellement total du produit alimentaire en finition et/ou d'une nappe d'un produit d'enveloppement continu souple et déformable durablement, mince, absorbant ou présentant une certaine perméabilité avec un matériau de solidarisation. Puis, on dépose au moins une nappe du produit d'enveloppement sur le produit alimentaire en finition et, enfin, on laise prendre le matériau de solidarisation jusqu'à ce que le produit d'enveloppement soit solidarisé au produit alimentaire fini.

Le produit alimentaire fini est le produit alimentaire en finition une fois enrobé du matériau de finition. Selon l'invention, le produit alimentaire fini, en combinaison, a un toucher doux, est exempt de corps exogène tel que talc ou flore de surface, à l'exception du produit d'enveloppement et du matériau de solidarisation ; a un aspect de haute qualité ; autorise une respiration convenable du produit alimentaire ; autorise le marquage du produit alimentaire fini ; autorise le pelage et soit tranchable, le produit d'enveloppement constituant une enveloppe intime, notamment totale du produit alimentaire et, plus spéficiquement, une enveloppe-étiquette.

Préférentiellement, on réalise l'enrobage total ou pratiquement total du produit alimentaire en finition plutôt ue l'imprégnation de la nappe de matériau d'enveloppement, cette dernière opération étant généralement peu commode. Toutefois, d'une façon générale, le procédé vise l'enrobage préférentiel du produit alimentaire en finition et/ou subsidiaire de la nappe de produit d'enveloppement.

Selon une caractéristique importante de l'invention, le produit d'enveloppement est un papier mousseline ou équivalent. Un tel papier mousseline est connu en soi de l'homme du métier dans le domaine de l'emballage et, pour cette raison, n'a pas à être spécifiquement décrit en détail.

L'invention s'applique toutefois à des produits d'enveloppement différents du papier mousseline mais présentant sensiblement les mêmes caractéristiques fonctionnelles que celui-ci.

On entend par matériau de solidarisation un matériau généralement à l'état plus ou moins fluide ou pâteux, apte à recouvrir le produit alimentaire et/ou la nappe de produit d'enveloppement de manière à assurer leur solidarisation réciproque.

L'enrobage avec le matériau de solidarisation est effectué en quantité telle que d'une part elle est suffisante pour assurer la solidarisation effective de la nappe du produit d'enveloppement au produit alimentaire et que d'autre part elle est limitée pour éviter de traverser substantiellement la nappe de produit d'enveloppement vers l'extérieur. La réalisation d'un tel enrobage remplissant ces conditions est à la portée de l'homme du métier dans les domaines de l'emballage ou encore du traitement du papier ou encore du traitement du tissu. Pour cette raison, cette caractéristique n'est pas décrite plus en détail.

On entend par la prise du matériau de solidarisation le fait que ce matériau de solidarisation change d'état notamment pour passer d'un état plus ou moins fluide ou pâteux à un état plus ou moins solide stable.

Le toucher du produit alimentaire fini est le toucher du produit d'enveloppement. Dès lors, on comprend qu'avec un produit d'enveloppement constitué de papier mousseline, le toucher soit doux, le papier mousseline donnant, au toucher une sensation douce et veloutée. Le produit alimentaire fini a un aspect de haute qualité qui résulte de la présentation esthétique du produit d'enveloppement combinée au fait que celui-ci épouse parfaitement la surface extérieure du produit alimentaire. Le produit d'enveloppement étant initialement sous forme de nappe peut comporter un marquage c'est-à-dire un ou plusieurs signes visibles décoratifs ou esthétiques ou informatiques ou publicitaires. Du fait de sa finesse et de sa solidarisation au produit alimentaire, le produit d'enveloppement est tranchable. Il est également pelable, cette pelabilité résultant de la migration de l'humidité du coeur du produit vers l'extérieur. Du fait de sa perméabilité intrinsèque, le produit d'enveloppement autorise la respiration du produit alimentaire ce qui concourt à sa conservation ou à son affinage.

Ainsi, le produit d'enveloppement peut constituer une enveloppe intime et notamment totale du produit alimentaire et plus spécifiquement une "enveloppe-étiquette".

On entend par nappe de produit d'enveloppement une certaine étendue du produit d'enveloppement présentant une longueur et/ou une largeur nettement plus grande que l'épaisseur du produit. Une telle nappe recouvre les différentes réalisations que sont une pièce surfaciquement étendue dans les deux directions longitudinale et latérale, de façon comparable ou du même ordre de grandeur ainsi qu'une bande plus longue que large.

Le produit d'enveloppement est continu à l'échelle de l'observation à l'oeil nu c'est-à-dire que le produit d'enveloppement paraît s'étendre de façon continue sur toute la surface extérieure du produit alimentaire ou sur la zone de la surface extérieure du produit alimentaire devant être recouverte. Par contre, ce caractère continu du produit d'enveloppement autorise des petites perforations, comme c'est d'ailleurs le cas pour du papier mousseline, perforations invisibles à l'oeil nu mais assurant le perméabilité et le caractère absorbant du produit d'enveloppement. Le produit d'enveloppement est souple de manière à pouvoir être conformé au produit alimentaire lors de la phase de dépôt de la nappe du produit d'enveloppement sur le produit alimentaire. Le produit d'enveloppement est également déformable durablement c'est-à-dire qu'ayant été conformé au produit alimentaire il garde ultérieurement cette même conformation. On entend par mince une nappe d'une épaisseur correspondant à celle d'une feuille de papier mousseline telle qu'elle est couramment utilisée dans l'industrie de l'emballage. Le caractère absorbant et la perméabilité du produit d'enveloppement permettent au matériau de solidarisation de pénétrer dans la nappe de produit d'enveloppement, sans pour autant la traverser, ainsi qu'il a été mentionné précédemment, pour assurer la solidarisation de la nappe de produit d'enveloppement au produit alimentaire.

En variante, le procédé comporte une étape spécifique ayant pour fonction de rendre plus sèche ou de limiter l'activité en eau de la couche superficielle du produit alimentaire en finition. Une telle étape spécifique consiste, par exemple, à placer le produit alimentaire en finition dans une ambiance sèche notamment à faire balayer le produit alimentaire en finition par un courant d'air sec. Cette étape spécifique intervient au plus tard lors de l'étape d'enrobage avec le matériau de solidarisation.

Dans le cas où le produit alimentaire en finition comporte une flore de surface, résultant de son processus de fabrication, le procédé de finition comporte une étape spécifique dans laquelle on débarrasse le produit alimentaire substantiellement de cette flore. En effet, une telle flore n'est nécessaire ni fonctionnellement, ni esthétiquement. Elle pourrait, éventuellement, être gênante. Cette étape spécifique visant à débarasser le produit alimentaire de la flore de surface intervient également au plus tard lors de l'étape d'enrobage avec le matériau de solidarisation.

Préférentiellement, on dépose le produit d'enveloppement sur le produit alimentaire en finition peu de temps après l'étape d'enrobage. Par exemple, ce dépôt intervient immédiatement après l'étape d'enrobage ou encore un court moment après l'étape d'enrobage le temps nécessaire à une certaine prise partielle et non totale du matériau de solidarisation. De telles caractéristiques opératoires sont bien connues de l'homme du métier dans le domaine de l'utilisation de tels matériaux de solidarisation.

On met en oeuvre, comme matériau de solidarisation, de la colle de qualité alimentaire appropriée, cette colle n'étant pas de la colle à l'eau et restant efficace en milieu humide. Une telle colle alimentaire est connue en soi de l'homme du métier et pour cette raison n'est pas décrite plus avant.

On enrobe le produit alimentaire en finition avec le matériau de solidarisation par trempage, brossage, projection ou équivalent. Cet enrobage est préférentiellement réalisé à froid. En variante, le matériau de solidarisation peut être légèrement chauffé.

On met en oeuvre une nappe de produit d'enveloppement de dimension telle qu'elle puisse être déposée sur la surface extérieure du produit alimentaire en finition bord à bord ou sensiblement bord à bord afin d'envelopper ainsi totalement ou quasi totalement le produit alimentaire. Cette disposition du produit d'enveloppement bord à bord est obtenu soit par un simple enveloppement du produit alimentaire, soit encore par un banderolage hélicoïdal du produit alimentaire.

Dans le cas d'un produit d'enveloppement constitué par du papier mousseline, on utilise, par exemple, une nappe mince ayant un poids de l'ordre de 18 à 28 grammes par m$^2$ et une perméabilité au gaz et à la vapeur d'eau totale ou importante.

Ainsi que cela résulte déjà de ce qui précède, la nappe de produit d'enveloppement peut comporter un ou une pluralité de marquages et notamment un marquage selon une disposition répétitive. Cette disposition a pour effet que le produit d'enveloppement peut faire alors fonction d'étiquette, cette enveloppe-étiquette étant solidarisée au produit alimentaire.

Ainsi que cela résulte également de ce qui est indiqué précédemment, le produit alimentaire en finition peut comporter initialement une autre enveloppe et on dépose alors la nappe de produit d'enveloppement sur cette enveloppe.

Pour déposer la nappe de produit d'enveloppement sur le produit alimentaire, on met en oeuvre une nappe apte à être déformée transversalement (c'est-à-dire sensiblement perpendiculairement à son propre plan) et ceci de façon locale et on plaque la nappe de produit d'enveloppement sur le produit alimentaire en finition y compris sur ses reliefs localisés, que ceux-ci soient en saillie ou en creux. Cette déformation transversale de la nappe de produit d'enveloppement permettant à celle-ci d'épouser les reliefs est rendue particulièrement aisée dans le cas d'un produit d'enveloppement constitué de papier mousseline lequel a la propriété de pouvoir être étendu en sens longitudinal ou transversal, dans une certaine limite, ce qui permet la déformation transversale.

Dans une première variante de réalisation, on part d'une nappe de produit d'enveloppement en forme de bande enroulée en rouleau, on dévide le rouleau progressivement et, simultanément, on applique la bande à partir de son extrémité initiale sur le produit alimentaire en finition par zone successive, notamment adjacente ou en recouvrement. Lorsque la totalité de la surface du produit alimentaire a été recouverte avec le produit d'enveloppement, on coupe transversalement la bande. On applique enfin l'extrémité finale de la bande adjacente à la coupe transversale sur le produit alimentaire. Cette variante de réalisation correspond au type général connu sous le nom de banderolage hélicoïdal.

Selon une autre variante de réalisation, on part d'une nappe de produit d'enveloppement à plat et de dimension convenable préalablement déterminée. Puis, on pose le produit alimentaire en finition sur la nappe à plat. Et, finalement on replie la nappe sur le produit alimentaire.

L'étape de dépose et d'application de la nappe de produit d'enveloppement sur le produit alimentaire en finition peut être réalisée manuellement ou peut être mécanisée en tout ou partie. Elle peut être réalisée en une étape unique ou en plusieurs étapes successives.

En particulier, on peut, pour déposer la nappe de produit d'enveloppement sur le produit alimentaire, procéder en deux phases à savoir une première phase dans laquelle on recouvre le produit alimentaire en finition avec le produit d'enveloppement et une deuxième phase, ultérieure, où on plaque la nappe couvrant ainsi le produit alimentaire sur ce dernier de manière à épouser les reliefs de sa surface extérieure. En particulier, on réalise cette deuxième phase de plaquage pendant une durée permettant une certaine prise du matériau de solidarisation.

Selon une variante de réalisation de l'invention possible mais nullement obligatoire, on plaque la nappe de produit d'enveloppement sur le produit alimentaire au moyen d'une feuille annexe et, souple, substantiellement étanche, appliquée sur la nappe, vers l'extérieur. Puis, on déplace cette feuille en appliquant une différence de pression de part et d'autre de celle-ci. La feuille souple constitue alors une pellicule venant elle-même épouser, du fait de la différence de pression réalisée, les reliefs de la surface extérieure du produit alimentaire et donc plaquer du même coup, la nappe de produit d'enveloppement placée entre cette feuille et le produit alimentaire.

Dans une autre forme de réalisation, on plaque la nappe de produit d'enveloppement sur le produit alimentaire par une action externe localisée, zone par zone, mécaniquement et notamment par brossage ou équivalent.

L'invention concerne encore un produit alimentaire fini par le procédé qui a été décrit précédemment. Plus particulièrement, le produit d'enveloppement est du papier mousseline ou équivalent présentant une certaine perméabilité, solidarisé au produit alimentaire proprement dit tout en étant pelable et tranchable. De plus, la nappe de produit d'enveloppement peut constituer une enveloppe totale du produit alimentaire formant étiquette, compte tenu du ou de la pluralité de marquages qu'elle comporte.

Dans une première variante de réalisation, le produit alimentaire est un saucisson ou équivalent comportant un boyau hydrophile. Dans ce cas, la pelabilité est obtenue pour l'ensemble boyau-produit d'enveloppement.

Selon une autre variante, le produit alimentaire est un fromage ou une spécialité fromagère ou équivalent et présente une croûte non hydrophile. Dans ce cas, ce caractère non hydrophile de la croûte externe du produit alimentaire en soi permet la pelabilité de la nappe de produit d'enveloppement.

**Revendications**

1) Procédé de finition de produits alimentaires à état de surface convenable notamment sec ou à activité en eau limitée, du type massif et à consistance générale solide, tels que, notamment, des produits carnés -par exemple des saucisses sèches ou équivalent- ou des produits lactés -par exemple des fromages ou spécialités fromagères-dans lequel on enrobe le produit alimentaire en finition dans sa forme finale ou quasi finale dans un matériau de finition caractérisé en ce que l'on réalise d'abord l'enrobage, au moins partiel, préférentiellement du produit alimentaire en finition et/ou subsidiairement d'une nappe d'un produit d'enveloppement continu souple et déformable durablement, mince, absorbant ou présentant une certaine perméabilité et plus spécialement un papier mousseline ou équivalent avec un matériau de solidarisation en quantité d'une part suffisante pour assurer la solidarisation de la nappe du produit d'enveloppement au produit alimentaire, d'autre part limitée pour éviter de traverser substentiellement la nappe vers l'extérieur ; puis on dépose au moins une nappe du produit d'enveloppement sur le produit alimentaire en finition ; et, enfin, on laisse prendre le matériau de solidarisation jusqu'à ce que le produit d'enveloppement soit solidarisé au produit alimentaire fini qui, en combinaison, a un toucher doux, est exempt de corps exogène tel que talc ou flore de surface ; a un aspect de haute qualité ; autorise une respiration convenable du produit alimentaire ; autorise un marquage du produit alimentaire fini ; autorise le pelage et soit tranchable, le produit d'enveloppement constituant une enveloppe intime, notamment totale, du produit alimentaire et, plus spécifiquement, une enveloppe-étiquette.

2) Procédé selon la revendication 1, caractérisé en ce qu'il comporte une étape spécifique ayant pour fonction de rendre plus sec ou de limiter l'activité en eau de la couche superficielle du produit alimentaire en finition, intervenant, au plus tard, lors de l'étape d'enrobage avec le matériau de solidarisation.

3) Procédé selon l'une quelconque des revendications 1 et 2, caractérisé en ce qu'il comporte une étape spécifique dans laquelle on débarasse le produit alimentaire substantiellement de la flore de surface.

4) Procédé selon l'une quelconque des revendications 1 à 3, caractérisé en ce que l'on dépose le produit d'enveloppement sur le produit alimentaire en finition peu de temps après l'étape d'enrobage.

5) Procédé selon l'une quelconque des revendications 1 à 4, caractérisé en ce que l'on met en oeuvre, comme matériau de solidarisation, de la colle de qualité alimentaire, restant efficace en milieu humide.

6) Procédé selon l'une quelconque des revendications 1 à 5, caractérisé en ce que l'on met en oeuvre, comme nappe de produit d'enveloppement, une nappe de dimensions telles qu'elle puisse être déposée sur le produit alimentaire en finition bords à bords ou sensiblement bords à bords et envelopper ainsi totalement ou quasi totalement le produit alimentaire.

7) Procédé selon l'une quelconque des revendications 1 à 6, caractérisé en ce que l'on met en oeuvre, comme nappe de produit d'enveloppement, une nappe mince, ayant un poids de 18 à 28 grammes au mètre carré, une perméabilité aux gaz et à la vapeur d'eau totale ou importante.

8) Procédé selon l'une quelconque des revendications 1 à 7, caractérisé en ce que l'on met en oeuvre, comme nappe de produit d'enveloppement, une nappe comportant un ou une pluralité de marquage, notamment un marquage selon une disposition répétitive, la nappe de produit d'enveloppement faisant alors fonction d'étiquette, cette enveloppe-étiquette étant solidarisée au produit alimentaire.

9) Procédé selon l'une quelconque des revendications 1 à 8, caractérisé en ce que l'on enrobe le produit alimentaire avec le matériau de solidarisation par trempage, brossage, projection, ou équivalent.

10) Procédé selon l'une quelconque des revendications 1 à 9, caractérisé en ce que le produit alimentaire en finition comporte initialement une autre enveloppe, continue ou discontinue, naturelle ou synthétique et on dépose la nappe de produit d'enveloppement sur cette enveloppe.

11) Procédé selon l'une quelconque des revendications 1 à 10, caractérisé en ce que l'on met en oeuvre, comme nappe de produit d'enveloppement, une nappe apte à être déformée transversalement de façon locale et on plaque la nappe de produit d'enveloppement sur le produit alimentaire en finition, y compris sur ses reliefs localisés, en saillie ou en creux.

12) Procédé selon l'une quelconque des revendications 1 à 11, caractérisé en ce l'on part d'une nappe de produit d'enveloppement en forme de bande enroulée en rouleau ; on dévide le rouleau progressivement et, simultanément, on applique la bande à partir de son extrémité initiale sur le produit alimentaire en finition, par zones successives, notamment adjacentes ou en recouvrement ; lorsque la totalité de la surface du produit alimentaire a été recouverte avec le produit d'enveloppement, on coupe transversalement la bande ; on applique enfin l'extrémité finale de la bande adjacente à la coupe transversale sur le produit alimentaire.

13) Procédé selon l'une quelconque des revendications 1 à 11, caractérisé en ce que l'on part d'une nappe de produit d'enveloppement à plat de dimensions convenables ; on pose le produit alimentaire en finition sur la nappe à plat ; et on replie la nappe sur le produit alimentaire.

14) Procédé selon l'une quelconque des revendications 1 à 13, caractérisé en ce que pour déposer la nappe de produit d'enveloppement on procède en deux phases à savoir une première phase ou on recouvre le produit alimentaire en finition avec le produit d'enveloppement et une deuxième phase ou on plaque la nappe recouvrant ainsi le produit alimentaire sur ce dernier.

15) Procédé selon la revendication 14, caractérisé en ce que l'on réalise la deuxième phase de plaquage jusqu'à épouser les reliefs localisés du produit alimentaire.

16) Procédé selon l'une quelconque des revendications 14 ou 15, caractérisé en ce que l'on réalise la deuxième phase de plaquage pendant une durée permettant une certaine prise du matériau de solidarisation.

17) Procédé selon l'une quelconque des revendications 14 à 16, caractérisé en ce que l'on plaque la nappe de produit d'enveloppement au moyen d'une feuille souple et substantiellement étanche appliquée sur la nappe et on déplace cette feuille en appliquant une différence de pression de part et d'autre de celle-ci.

18) Procédé selon la revendication 17, caractérisé en ce que l'on place d'abord le produit alimentaire recouvert de la nappe de produit d'enveloppement dans une feuille en forme d'enceinte ; puis on fait le vide dans cette enceinte ce qui a pour effet de l'appliquer sur le produit alimentaire, donc de plaquer la nappe de produit de d'enveloppement sur le produit alimentaire.

19) Procédé selon l'une quelconque des revendications 14 à 16, caractérisé en ce que l'on plaque la nappe de produit d'enveloppement sur le produit alimentaire par une action externe localisée, zone par zone, notamment par brossage ou équivalent.

20) Produit alimentaire fini à état de surface sec ou à activité en eau limitée, du type massif, à consistance générale solide et à matériau de finition l'enrobant, tel que notamment des produits carnés -par exemple des saucisses sèches ou équivalent -ou des produits lactés -par exemple des fromages ou spécialités fromagères-caractérisé en ce qu'il est réalisé par le procédé selon l'une quelconque des revendications 1 à 19 et que le matériau de finition l'enrobant est du papier mousseline ou équivalent présentant une certaine perméabilité, solidarisé au produit alimentaire proprement dit, tout en étant pelable et tranchable.

21) Produit alimentaire selon la revendication 20, caractérisé par le fait que la nappe de produit d'enveloppement constitue une enveloppe totale du produit alimentaire formant étiquette.

22) Produit alimentaire selon l'une quelconque des revendications 20 et 21, caractérisé en ce que le produit alimentaire est un saucisson ou équivalent comportant un boyau hydrophile, ce qui permet la pelabilité de l'ensemble boyau-produit d'enveloppement.

23) Produit alimentaire selon l'une quelconque des revendications 20 et 21, caractérisé en ce que le produit alimentaire est un fromage ou spécialité fromagère ou équivalent à croûte non hydrophile ce qui permet la pelabilité du produit d'enveloppement.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | CH-A- 475 713 (HUCKFELDT & THORLICHEN) <br> * Revendications I,II; 1-8 * | 1 | A 22 C 13/00 |
| A | DE-C- 763 849 (J. SCHWERER) <br> * Revendication * | 1 | |
| A | FR-A-1 397 501 (W. SOPP) <br> * Résumé * | 1 | |
| A | FR-A-2 075 215 (TEE-PAK) <br> * Revendicaton 1 * | 1 | |
| A | GB-A- 745 793 (McDUFF WAKEFIELD LAMB) <br> * Revendication 1; figure 1 * | 1 | |
| A | US-A-2 207 793 (A.J. FREEMAN) <br> * Revendicaton 1; figures 5,6 * | 1 | |
| A | EP-A-0 214 418 (NATURIN-WERK BECKER) <br> * Revendication 1; figures 3-5 * | 1 | |

DOMAINES TECHNIQUES RECHERCHES (Int. Cl.4)

A 22 C

Le présent rapport a été établi pour toutes les revendications

| Lieu de la recherche | Date d'achèvement de la recherche | Examinateur |
|---|---|---|
| LA HAYE | 20-07-1989 | PERMENTIER W.A. |